# EUROPÄISCHE PATENTSCHRIFT

(11) **EP 2 966 369 B1**
(45) Veröffentlichungstag und Bekanntmachung des Hinweises auf die Patenterteilung: **27.01.2021**
(21) Anmeldenummer: 15174856.3
(22) Anmeldetag: 01.07.2015
(51) Int. Cl.: F24D 3/16, F24D 13/02, F24F 5/00, F24D 3/12, F24D 3/14

(54) **KLIMAANORDNUNG UND INSTALLATIONSVERFAHREN HIERFÜR**
AIR CONDITIONING ASSEMBLY AND METHOD OF INSTALLATION FOR SAME
SYSTEME DE CLIMATISATION ET SON PROCEDE D'INSTALLATION

(30) Priorität: 07.07.2014 DE 102014109449; 19.08.2014 DE 102014111808
(43) Veröffentlichungstag der Anmeldung: 13.01.2016
(73) Patentinhaber: I.C.B. Innovations-Center-Bad GmbH & Co. KG, 33181 Bad Wünnenberg (DE)
(72) Erfinder:
(74) Vertreter: Wickord, Wiro

(56) Entgegenhaltungen:
- WO-A1-2011/090378
- DE-A1-102010 036 439

## Beschreibung

Die Erfindung betrifft eine Klimaanordnung nach dem Oberbegriff des Patentanspruchs 1 sowie ein Installationsverfahren für eine Klimaanordnung.

Aus der DE 10 2010 036 439 A1 ist eine gattungsgemäße Klimaanordnung bekannt mit zwei zueinander beabstandeten und über einen Adapter verbundenen Klimamodulen. Jeweils sieht ein Klimamodul eine Fluidleitung sowie eine aus einem dämmenden Material hergestellte Unterschicht sowie eine aus einem die Wärme gut leitenden Material hergestellte Oberschicht vor. Die DE 10 2010 036 439 A1 offenbart damit eine Klimaanordnung mit den Merkmalen des Oberbegriffs von Anspruch 1 sowie ein Installationsverfahren für eine Klimaanordnung nach dem Oberbegriff von Anspruch 12.

Aus der DE 10 2011 078 934 A1 ist eine weitere Klimaanordnung bekannt. Ein Klimamodul der Klimaanordnung sieht eine Mehrzahl von beabstandet zueinander angeordneten Fluidleitungen vor, welche an einer Klimaverteilplatte festgelegt sind. An der Klimaverteilplatte ist zudem auf einer den Fluidleitungen zugewandten Innenseite derselben eine zur Wärmeverteilung ausgebildete Kaschierung vorgesehen. Ein durch die Klimaverteilplatte begrenzter Installationsraum des Klimamoduls, in dem die Fluidleitungen vorgesehen sind, ist ansonsten mit einem Dämmstoff befüllt, welcher insbesondere die Fluidleitungen mantelseitig umgibt und einer Abgabe von Wärme in den Installationsraum entgegenwirkt. Zusätzlich sieht das Klimamodul einen externen Kabelschacht vor.

Grundsätzlich hat sich der Aufbau der Klimaanordnung in der Praxis bewährt. Gleichwohl ist es Aufgabe der vorliegenden Erfindung, eine konstruktiv einfach gestaltete Klimaanordnung bereitzustellen, welche kostengünstig hergestellt und einfach montiert werden kann, und ein Installationsverfahren für eine erfindungsgemäße Klimaanordnung anzugeben.

Zur Lösung der Aufgabe weist die Erfindung die Merkmale des Patentanspruchs 1 auf.

Der besondere Vorteil der Erfindung besteht darin, dass eine Mehrzahl von werksseitig vorgefertigten Klimamodulen in besonders einfacher Weise montiert und in den Klimamodulen vorgesehene Fluidleitungen durch baustellenseitig im Rahmen der Installation nachträglich eingefügte Verbindungsleitungen angeschlossen werden. Durch das Vorsehen vorgefertigter Klimamodule können die Herstellkosten der Klimaanordnung signifikant reduziert und der Arbeitsaufwand bei der Installation der Klimamodule gesenkt werden. Insofern reduziert sich die Beeinträchtigung für die Bewohner beziehungsweise Nutzer der Räume. Die Klimamodule der Klimaanordnung können dabei gleich oder verschiedenartig ausgebildet sein. Beispielsweise können werksseitig Klimamodule in unterschiedlichen Längen bei einem ansonsten gleichen Aufbau bereitgestellt werden.

Die Optik der Klimaanordnung ist aufgrund des Vorsehens der Abdeckung für die Verbindungsleitung gleichartig. Die Abdeckung, welche an die erste Klimaverteilplatte und die zweite Klimaverteilplatte anschließt, kann mit der gleichen Oberflächenbeschaffenheit vorgesehen werden wie die Klimaverteilplatten selbst. Beispielsweise können die Klimaverteilplatten und die Abdeckung lackiert oder mit einer Heizkörperfarbe bestrichen sein. Beispielsweise kann die Farbgebung der sonstigen Gestaltung des Raums angepasst sein. Die Abdeckung und die Klimaverteilplatten können aus einem gleichen Werkstoff oder aus unterschiedlichen Materialien hergestellt sein. Beispielsweise sind die Abdeckung und die Klimaverteilplatten aus einem wärmeleitenden Material, insbesondere aus Metall, realisiert.

Nach der Erfindung sind in jedem Klimamodul wenigstens zwei Fluidleitungen zueinander beabstandet vorgesehen. Die zwei Fluidleitungen erstrecken sich in eine Längsrichtung des Klimamoduls. Sie sind in einem gemeinsamen, luftgefüllten Installationsraum vorgesehen und nicht von einem Isoliermaterial umgeben. Vorteilhaft verbessert sich die Leistungsfähigkeit des Klimamoduls durch das Vorsehen von zwei Fluidleitungen. Der luftgefüllte Installationsraum, welcher von der Klimaverteilplatte begrenzt ist, dient zugleich der Isolierung. Die im Installationsraum vorgesehene und die Fluidleitung umgebende Luft wirkt insofern einer unerwünschten Übertragung von Wärme in Richtung der Wand beziehungsweise der Decke entgegen. Zugleich vereinfacht sich der Aufbau des Klimamoduls durch den Verzicht auf die Isolierung im Installationsraum. Das Klimamodul kann hierdurch schnell und kostengünstig hergestellt werden.

Nach einer Weiterbildung der Erfindung ist die Verbindungsleitung stoffschlüssig mit den zugeordneten Fluidleitungen verbunden. Vorteilhaft kann die stoffschlüssige Verbindung der Leitungen kostengünstig erfolgen. Geeignete Verbindungsverfahren, wie beispielsweise das Löten, können auf der Baustelle einfach, zuverlässig und schnell durchgeführt werden. Auf separate Komponenten, beispielsweise Schraubverbinder und separate Dichtkörper, kann hierbei verzichtet werden.

Nach einer Weiterbildung der Erfindung ist an jedem Klimamodul mindestens ein Befestigungsmittel vorgesehen, welches die in dem Installationsraum vorgesehene Fluidleitung jedenfalls abschnittsweise umgreift und abschnittsweise flächig an eine der Fluidleitung zugewandte Innenseite der Klimaverteilplatte angelegt ist. Vorteilhaft kann durch das Festlegen der Fluidleitung an der Klimaverteilplatte eine für die gemeinsame Montage vorgesehene Baugruppe vorgefertigt werden. Es reduziert sich insofern der Aufwand zur Durchführung der Montage. Zusätzlich verbessern sich die thermischen Eigenschaften des Klimamoduls insbesondere dann, wenn das Befestigungsmittel aus einem Temperatur leitenden Werkstoff hergestellt ist. Das Befestigungsmittel begünstigt dann den Übergang von Wärme von der Fluidleitung auf die Klimaverteilplatte.

Nach einer Weiterbildung der Erfindung ist in dem luftgefüllten Installationsraum des Klimamoduls wenigstens ein Haltemittel für eine nicht fluidische Versorgungsleitung, insbesondere für eine elektrische Versorgungsleitung, vorgesehen. Vorteilhaft kann durch die räumliche Integration der nicht fluidischen Versorgungsleitungen in dem Installationsraum auf separate externe Kabelschächte verzichtet werden. Genutzt wird hierbei der durch den Verzicht auf die Isolierung frei werdende Raum in dem Klimamodul. Als Haltemittel kann beispielsweise eine Klammer mit einem elastisch verformbaren Haltearm vorgesehen sein, welcher bevorzugt aus Kunststoff oder einem anderen elektrisch nicht leitenden Material gefertigt ist. Vorteilhaft ist das Haltemittel in dem Installationsraum beabstandet zu der Klimaverteilplatte und den Fluidleitungen vorgesehen. Es ergibt sich insofern eine geringe thermische Belastung für die in dem Installationsraum über die Haltemittel befestigte nicht fluidische Versorgungsleitung.

Nach einer Weiterbildung der Erfindung sind als Teil der Klimaanordnung ein ortsfern von dem ersten Klimamodul und dem zweiten Klimamodul installierter Klimaautomat und den Klimaautomaten mit den Klimamodulen verbindende Zu- und Rückleitungen für das Fluid vorgesehen. Zwischen dem Klimaautomaten und den Klimamodulen ist ein Anschlussmodul vorgesehen, welches insbesondere der Zuleitung beziehungsweise der Rückleitung zugeordnet ist und Mittel zum Absperren der Zu- beziehungsweise Rückleitung, Mittel zum Befüllen der Zu- beziehungsweise Rückleitung, Mittel zum Entleeren der Zu- beziehungsweise Rückleitung, Mittel zum Entlüften der Zubeziehungsweise Rückleitung sowie Mittel zum Erfassen einer in der Zuleitung beziehungsweise Rückleitung geführten Wärmemenge beziehungsweise eines Fluid-Volumenstroms aufweist. Vorteilhaft kann durch das Vorsehen des Anschlussmoduls und die räumliche Trennung des Klimaautomaten von den Klimamodulen eine erfindungsgemäße Klimaanordnung insbesondere in Mehrfamilienhäusern kostengünstig realisiert werden. Ein zentraler Klimaautomat wird hierbei beispielsweise in einem Kellerraum beziehungsweise unter dem Dachboden installiert. Verschiedene Klimamodule werden in den verschiedenen Wohnungen des Mehrfamilienhauses vorgesehen. Jeder Wohnung ist hierbei ein separates Anschlussmodul zugeordnet. Insofern besteht die Möglichkeit, die Wohnung mit den ihr zugeordneten Räumen separat abzusperren, die zu der Wohnung gehörigen Fluidleitungen mit dem Fluid zu befüllen beziehungsweise zu entleeren, die Fluidleitungen zu entlüften beziehungsweise die Energiemengen zu ermitteln und abzurechnen.

Nach einer Weiterbildung der Erfindung ist in einem ersten Klimamodul neben der ersten Fluidleitung eine dritte Fluidleitung vorgesehen. In einem zweiten Klimamodul ist neben der zweiten Fluidleitung eine vierte Fluidleitung vorgesehen. Die von dem Klimaautomaten kommende Zuleitung ist mit der ersten Fluidleitung des ersten Klimamoduls und der vierten Fluidleitung des zweiten Klimamoduls verbunden. Die Rückleitung ist mit der zweiten Fluidleitung des zweiten Klimamoduls und der dritten Fluidleitung des ersten Klimamoduls verbunden. Weiter sind die erste Fluidleitung und die zweite Fluidleitung verbunden. Schließlich sind die dritte Fluidleitung und die vierte Fluidleitung verbunden. Vorteilhaft wird durch die erfindungsgemäße Verbindung der verschiedenen Fluidleitungen ein gegenläufiger Fluidstrom in den Klimamodulen realisiert. In einem so geschaffenen Fluidkreislauf bildet sich vorteilhaft eine insgesamt sehr gleichmäßige Oberflächentemperatur an den verschiedenen Klimaverteilplatten aus mit der Folge, dass der die Klimamodule aufweisende Raum gleichmäßig erwärmt wird.

Es ist insbesondere vermieden, dass zuleitungsnahe Klimamodule stärker erwärmt werden und eine höhere Temperatur an der Klimaverteilplatte aufweisen als zuleitungsfern installierte Klimamodule.

Nach einer alternativen Ausführungsform der Erfindung kann das grundlegende Konzept der Klimamodule mit einer elektrischen Heizfolie realisiert werden. Zusätzlich zu den von dem Heizfluid durchströmten Fluidleitungen oder als Ersatz derselben wird die Klimaverteilplatte der Klimamodule im Bereich der Innenseite ganz oder abschnittsweise mit der elektrischen Heizfolie ausgekleidet. Beim Betrieb der elektrischen Heizfolie wird so die Klimaverteilplatte erwärmt und der Raum beheizt. Die elektrische Heizfolie ist insofern ebenfalls im Installationsraum der Klimamodule vorgesehen und für den außenstehenden Betrachter nicht zu erkennen. Anstelle der elektrischen Heizfolie kann zum Erwärmen der Klimaverteilplatte eine elektrisch leitfähige Beschichtung vorgesehen sein.

Zur Lösung der Aufgabe wird zudem gemäß der vorliegenden Erfindung ein Installationsverfahren mit den Merkmalen von Anspruch 12 vorgeschlagen, welches eine in einem ersten Klimamodul installierte Fluidleitung über eine Verbindungsleitung mit einer in einem zweiten Klimamodul installierten zweiten Fluidleitung verbindet. Die Verbindung erfolgt, indem die Verbindungsleitung stirnseitig sowohl in die erste Fluidleitung als auch in die zweite Fluidleitung eingesetzt wird. Durch die Zuführung von elektrischer Energie erhitzt sich die Verbindungsleitung und eine stoffschlüssige Verbindung mit der ersten Fluidleitung und der zweiten Fluidleitung wird hergestellt.

Der besondere Vorteil des erfindungsgemäßen Installationsverfahrens ist in seiner einfachen baustellenseitigen Durchführbarkeit zu sehen. Die Verbindungsleitung kann einfach und zuverlässig in die Fluidleitungen der bereits installierten Klimamodule eingesetzt werden. Die stoffschlüssige Verbindung kann innerhalb kurzer Zeit mit geringem Arbeitsaufwand hergestellt werden. Die zur Verbindung der Fluidleitungen vorzusehende Verbindungsleitung kann vor Ort auf der Baustelle zugeschnitten und geformt werden. Sofern die Räumlichkeiten vorab bekannt sind und insbesondere ein Aufmaß des Raums vorliegt, kann die Verbindungsleitung ebenfalls werkseitig vorgefertigt werden. Vor Ort auf der Baustelle reduziert sich der Installationsaufwand dann weiter.

Die Fluidleitungen sowie die Verbindungsleitung können beispielsweise aus Kupfer hergestellt sein. Eine Wandstärke der Verbindungsleitung kann dabei geringer sein als eine Wandstärke der in den Klimamodulen vorgesehenen Fluidleitungen. Hierdurch wird sichergestellt, dass beim Zuführen der elektrischen Energie die Verbindungsleitung schnell und gezielt erhitzt wird. Beispielsweise ist ein Außendurchmesser der Verbindungsleitung geringer als ein Innendurchmesser der in den Klimamodulen vorgesehenen Fluidleitungen. Insofern kann vor dem Herstellen der stoffschlüssigen Verbindung die Verbindungsleitung endseitig in die Fluidleitungen eingesetzt werden.

Nach einer Weiterbildung der Erfindung wird zum Zuführen der elektrischen Energie eine elektrische Kontaktklemme mantelseitig an die Verbindungsleitung eingesetzt. Es wird dann die Verbindungsleitung durch das Zuführen der elektrischen Energie erwärmt und die stoffschlüssige Verbindung zwischen den Fluidleitungen und der hierein eingesetzten Verbindungsleitung hergestellt.

Nach einer Weiterbildung der Erfindung wird das Klimamodul in dem Verbindungsbereich zwischen der Decke und der Wand installiert, indem zunächst eine der Decke zugewandte Grundwandung und/oder eine der Wand zugewandte Rückwandung des Klimamoduls festgelegt werden. Dann wird eine Klimaverteilplatte, an der die Fluidleitungen befestigt sind, an die Grundwandung beziehungsweise die Rückwandung angesetzt und festgelegt. Die Festlegung kann stoff-, kraft- oder formschlüssig erfolgen. Beispielsweise können Schrauben, Nägel, Klebstoff, Krampen oder Klettverbinder vorgesehen werden zum Verbinden der Klimaverteilplatte mit der Grundwandung beziehungsweise der Rückwandung des Klimamoduls.

Aus den weiteren Unteransprüchen und der nachfolgenden Beschreibung sind weitere Vorteile, Merkmale und Einzelheiten der Erfindung zu entnehmen. Dort erwähnte Merkmale können jeweils einzeln für sich oder auch in beliebiger Kombination erfindungswesentlich sein. Erfindungsgemäß beschriebene Merkmale und Details der Klimaanordnung gelten selbstverständlich auch im Zusammenhang mit dem erfindungsgemäßen Verfahren und umgekehrt. So kann auf die Offenbarung zu den einzelnen Erfindungsaspekten stets wechselseitig Bezug genommen werden. Die Zeichnungen dienen lediglich beispielhaft der Klarstellung der Erfindung und haben keinen einschränkenden Charakter.

Ausführungsbeispiele der Erfindung werden nachfolgend anhand von Zeichnungen näher erläutert.

Es zeigen:
- Fig. 1: eine Schnittdarstellung durch ein Klimamodul einer erfindungsgemäßen Klimaanordnung mit zwei in einem Installationsraum des Klimamoduls beabstandet zueinander angeordneten Fluidleitungen,
- Fig. 2: eine Aufsicht auf zwei zueinander bestandet angeordneten Klimamodule mit je zwei Fluidleitungen sowie zwei Verbindungsleitungen zum paarweisen Verbinden der in den Klimamodulen vorgesehenen Fluidleitungen,
- Fig. 3: eine Aufsicht auf einen Eckverbindungsbereich einer erfindungsgemäßen Klimaanordnung mit zwei zueinander beabstandeten unter einem rechten Winkel zueinander angeordneten Klimamodulen und abgewinkelt ausgebildeten Verbindungsleitungen für die in den Klimamodulen vorgesehenen Fluidleitungen,
- Fig. 4: ein Prinzipdarstellung einer mit der erfindungsgemäßen Klimaanordnung ausgestatteten Wohnung in einem Mehrfamilienhaus und
- Fig. 5: eine Prinzipdarstellung für die leitungstechnische Verbindung einer Zuleitung und einer Rückleitung mit den in den Klimamodulen vorgesehenen Fluidleitungen.

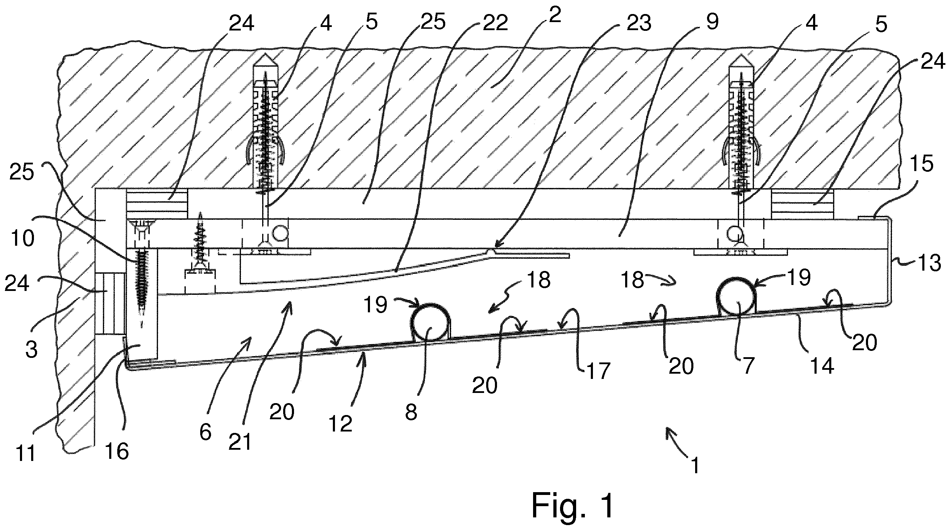

Ein Klimamodul 1 einer erfindungsgemäßen Klimaanordnung ist nach Fig. 1 in einem durch eine Decke 2 und eine Wand 3 gebildeten Verbindungsbereich eines zu klimatisierenden Raums festgelegt. Das Klimamodul 1 ist exemplarisch über Dübel 4 und Schrauben 5 in der Decke 2 gehalten.

Das Klimamodul 1 ist insbesondere nach Art einer Decken- beziehungsweise Strahlungsheizung ausgebildet. Es dient dazu, den Raum zu klimatisieren. Zu diesem Zweck sieht es einen Installationsraum 6, eine erste, in dem Installationsraum 6 vorgesehene Fluidleitung 7 und eine weitere, zu der ersten Fluidleitung 7 beabstandet positionierte Fluidleitung 8 vor. Der Installationsraum 6 wird von einer der Decke 2 zugewandten Grundwandung 9, einer senkrecht hierzu orientierten und an der Grundwandung 9 über eine Schraube 10 festgelegte Rückwandung 11 und eine Klimaverteilplatte 12 begrenzt. Die Klimaverteilplatte 12 ist abgewinkelt ausgebildet. Sie weist einen kurzen, im Wesentlichen parallel zu der Rückwandung 11 orientierten ersten Schenkel 13 sowie einen an den ersten Schenkel 13 anschließenden zweiten Schenkel 14 auf. Der erste Schenkel 13 schließt sich auf einer der Rückwandung 11 abgewandten Seite an die Grundwandung 9 an. Der zweite Schenkel 14 erstreckt sich zwischen dem ersten Schenkel 13 und der Rückwandung 11. An einem der Grundwandung 9 zugewandten Ende des ersten Schenkels 13 ist ein Anlageabschnitt 15 angeformt, welcher die Grundwandung 9 umgreift. In analoger Weise ist an dem zweiten Schenkel 14 im Bereich der Rückwandung 11 ein Anlageabschnitt 16 vorgesehen. Mit dem Anlageabschnitt 16 umgreift die Klimaverteilplatte 12 die Rückwandung 11.

Die erste Fluidleitung 7 und die weitere Fluidleitung 8 sind im Bereich des zweiten Schenkels 14 an der Klimaverteilplatte 12 festgelegt. Die Fluidleitungen 7, 8 sind an einer der Grundwandung 9 zugewandten Innenseite 17 angelegt und über Befestigungsmittel 18 gehalten. Die Befestigungsmittel 18 umgreifen mit einem Bogenabschnitt 19 die Fluidleitungen 7, 8 mantelseitig. Endabschnitte 20 des Befestigungsmittels 18, welche an den Bogenabschnitt 19 anschließen, liegen dann abschnittsweise flächig an der Innenseite 17 der Klimaverteilplatte 12 an.

In dem Installationsraum 6 ist des Weiteren ein Haltemittel 21 für nicht fluidische Versorgungsleitungen (nicht dargestellt), insbesondere für elektrische Versorgungsleitungen, vorgesehen.

Das Haltemittel 21 ist beabstandet zu der Klimaverteilplatte 12 und den Fluidleitungen 7, 8 an der Grundwandung 9 festgelegt. Es sieht einen elastisch verformbaren Haltearm 22 vor, welcher in der dargestellten Grundstellung mit einer Nase 23 an der Grundwandung 9 anliegt. Zur Aufnahme einer nicht fluidischen Versorgungsleitung wird der Haltearm 22 elastisch verformt und von der Grundwandung 9 abgehoben. Die nicht fluidische Versorgungsleitung wird dann zwischen dem Haltearm 22 und der Grundwandung 9 positioniert beziehungsweise festgelegt.

Zum Ausgleich von Unebenheiten der Decke 2 und der Wand 3 wird bei der Installation des Klimamoduls 1 in dem Verbindungsbereich zwischen der Grundwandung 9 und der Decke 2 sowie zwischen der Rückwandung 11 und der Wand 3 eine Mehrzahl von Beabstandungsmittel 24 vorgesehen. Die Beabstandungsmittel 24 sind so dimensioniert, dass zwischen dem Klimamodul 1, der Decke 2 und der Wand 3 ein umlaufender Luftspalt 25 gebildet ist. Wie der luftgefüllte Installationsraum 6 dient auch der Luftspalt 25 der thermischen Isolierung.

Das Klimamodul 1 wird zum Heizen und/oder Kühlen des Raums benutzt. Zu diesem Zweck werden die Fluidleitungen 7, 8 von einem temperierten Fluid durchströmt. Das Fluid wärmt oder kühlt die Klimaverteilplatte 12, welche dann den Raum in der gewünschten Weise temperiert. Das Raumklima kann dabei zum einen durch die Temperatur des Fluids und zum anderen durch einen Volumenstrom des Fluids in den Fluidleitungen 7, 8 beeinflusst werden.

Optional kann nach einer nicht dargestellten, alternativen Ausführungsform der Erfindung vorgesehen sein, dass in dem Installationsraum 6 eine Luftzirkulation vorgesehen wird zur Realisierung einer kontrollierten, aktiven Wohnraumbelüftung. Die Zuluft beziehungsweise die Abluft kann unmittelbar in dem Installationsraum 6 beziehungsweise einem Teil desselben oder über zusätzliche Fluidleitungen geführt werden, welche in dem Installationsraum 6 vorgesehen werden. Beispielsweise können zur Realisierung des Luftdurchtritts der erste Schenkel 13 der Klimaverteilplatte 12 oder die Grundwandung 9 oder die Rückwandung 11 Öffnungen aufweisen oder perforiert ausgebildet sein. Insbesondere kann die Luftzirkulation so ausgebildet sein, dass ein Luftaustausch von etwa 0,5 m³ bis 0,7 m³ Luft pro Kubikmeter Raum in der Stunde ausgetauscht wird. Während die Zuluft insbesondere über die Wohn- und Schlafräume realisiert wird, wird die Abluft bevorzugt über die Küche, das Bad oder andere Nebenräume realisiert.

Vorteilhaft ergibt sich durch die Verbindung des erfindungsgemäßen Heizungssystems mit der aktiven Belüftung eine hervorragende Möglichkeit zur Beeinflussung des Raumklimas. Die zugeführte Luft wird angewärmt und verteilt sich über die gesamten Wohnräume. Da zugleich über die Strahlungsheizung im Wesentlich die Wände beziehungsweise die Oberflächen bis in den Räumen vorgesehenen Mobiliars erwärmt wird, ist die Kombination energetisch vorteilhaft und führt zu geringen Betriebskosten.

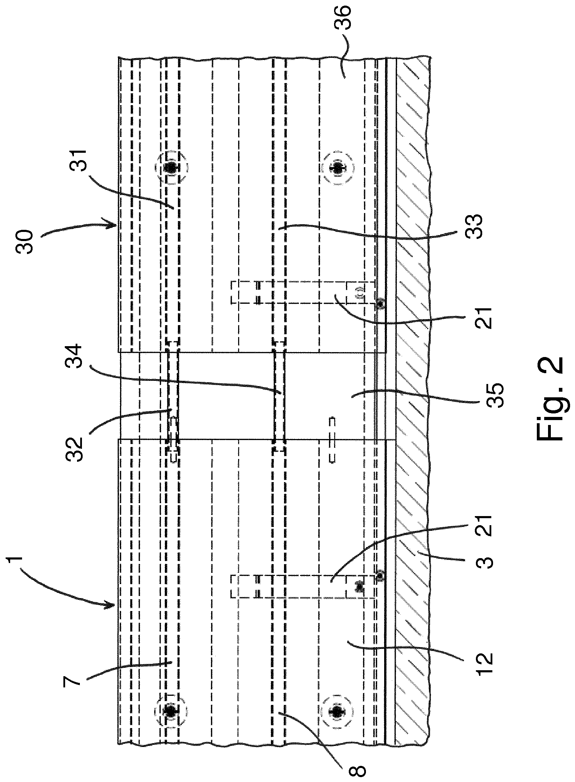

Erfindungsgemäß ist vorgesehen, dass zur Fertigung einer Klimaanordnung eine Mehrzahl von werksseitig vorgefertigten Klimamodulen 1, 30 zueinander beabstandet in dem Verbindungsbereich des Raums montiert werden. Die Klimamodule 1, 30 weisen hierbei eine zueinander korrespondierende Anzahl von Fluidleitungen auf. Nach dem Ausführungsbeispiel der Erfindung gemäß Fig. 2 weist ein erstes Klimamodul 1 eine erste Fluidleitung 7 auf. Das zweite Klimamodul 30 weist eine zweite Fluidleitung 31 auf. Die erste Fluidleitung 7 und die zweite Fluidleitung 31 sind über eine Verbindungsleitung 32, welche zwischen dem ersten Klimamodul 1 und dem zweiten Klimamodul 30 vorgesehen ist, miteinander verbunden. Das erste Klimamodul 1 weist darüber hinaus eine dritte Fluidleitung 8 als weitere Fluidleitung auf. In analoger Weise ist im zweiten Klimamodul 30 eine vierte Fluidleitung 33 als weitere Fluidleitung vorgesehen. Die dritte Fluidleitung 8 und die vierte Fluidleitung 33 sind über eine weitere Verbindungsleitung 34 miteinander verbunden.

Zum Verbinden der ersten Fluidleitung 7 mit der zweiten Fluidleitung 31 sowie der dritten Fluidleitung 8 mit der vierten Fluidleitung 33 werden die kurzen Verbindungsleitungen 32, 34 stirnseitig in die ihnen zugeordneten Fluidleitungen 7, 8, 31, 33 eingesetzt. Eine stoffschlüssige Verbindung der Verbindungsleitung 32 mit der ersten Fluidleitung 7 und der zweiten Fluidleitung 31 sowie der Verbindungsleitung 34 mit der dritten Fluidleitung 8 und der vierten Verbindungsleitung 33 wird erreicht, indem die Verbindungsleitungen 32, 34 erwärmt werden. Zum Erwärmen der Verbindungsleitungen 32, 34 wird insbesondere elektrische Energie aufgewandt, welche über mantelseitig an die Verbindungsleitungen 32, 34 angesetzte elektrische Kontaktklemmen eingeleitet wird. Nach dem Herstellen der stoffschlüssigen Verbindung zwischen den Fluidleitungen 7, 8, 31, 33 und den Verbindungsleitungen 32, 34 werden die elektrischen Kontaktklemmen entfernt. Zum Überdecken der Verbindungsleitungen 32, 34 ist eine Abdeckung 35 vorgesehen. Die Abdeckung 35 wird an die Klimaverteilplatte 12 des ersten Klimamoduls 1 und eine korrespondierend gestaltete Klimaverteilplatte 36 des zweiten Klimamoduls 30 angesetzt.

Nach einer alternativen, nicht dargestellten Ausführungsform der Erfindung werden die Fluidleitungen 7, 8, 31, 33 und die Verbindungsleitungen 32, 24 über Installationsverbindungsmittel, beispielsweise Verschraubungen, lösbar miteinander verbunden.

Da die einander stirnseitig zugewandten Klimamodule 1, 30 stirnseitig unverschlossen sind, können die in dem Installationsraum 6 vorgesehenen nicht fluidischen Versorgungsleitungen von dem ersten Klimamodul 1 in das zweite Klimamodul 30 geführt werden.

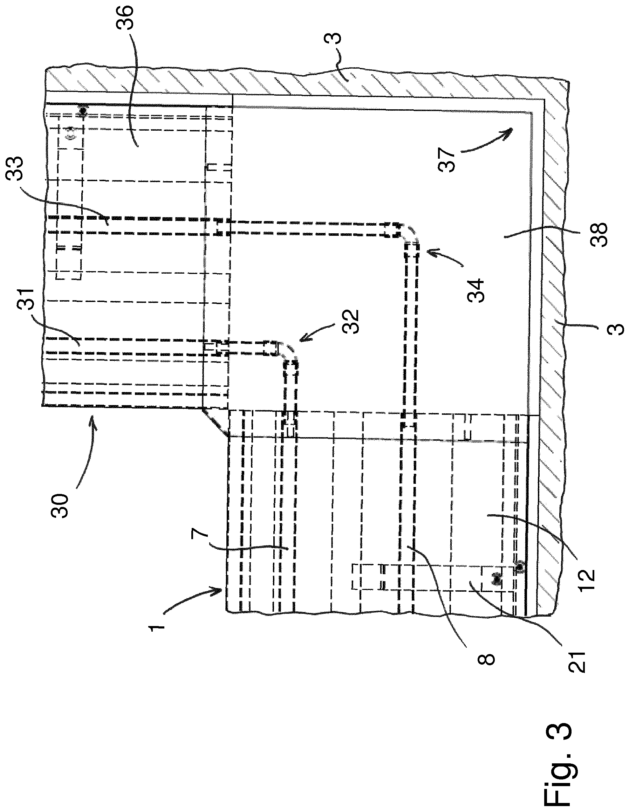

Fig. 3 zeigt einen Eckbereich einer erfindungsgemäßen Klimaanordnung. Das erste Klimamodul 1 und das zweite Klimamodul 30 sind hierbei winkelversetzt in einer Raumecke 37 vorgesehen. Über winklig ausgebildete Verbindungsleitungen 32, 34 sind wie gehabt die dem ersten Klimamodul 1 zugeordnete erste Fluidleitung 7 und die dem zweiten Klimamodul 30 zugeordnete zweite Fluidleitung 31 einerseits sowie die dritte Fluidleitung 8 des ersten Klimamoduls 1 und die vierte Fluidleitung 33 des zweiten Klimamoduls 30 anderseits miteinander verbunden. Eine Abdeckung 38, welche den Verbindungsleitungen 32, 34 zugeordnet ist, ist im Wesentlichen quadratisch ausgebildet und an die Geometrie der Raumecke 37 angepasst.

Nach einer alternativen, nicht dargestellten Ausführungsform der Erfindung kann in analoger Weise eine Außenecke zwischen zwei winklig zueinander angeordneten Klimamodulen 1, 30 über entsprechend geformte Verbindungsleitungen 32, 34 und eine Abdeckung ausgebildet werden. Die Erfindung ist nicht auf das Verbinden von zueinander fluchtend angeordneten Klimamodulen 1, 30 beziehungsweise zueinander rechtwinklig installierten Klimamodulen 1, 30 beschränkt. Insbesondere kann durch geeignete Verbindungsleitungen 32, 34 ein beliebiger Winkelversatz zwischen einander zugeordneten Klimamodulen 1, 30 ausgeglichen werden.

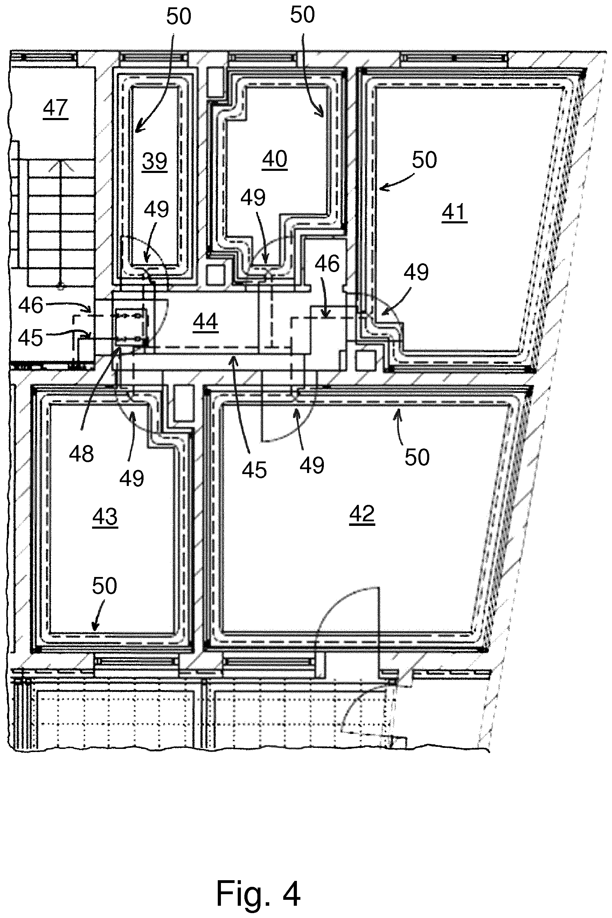

Die Verwendung der Klimamodule 1, 30 in einer erfindungsgemäßen Klimaanordnung wird insbesondere in der Prinzipdarstellung nach Fig. 4 transparent. Fig. 4 zeigt einen Grundriss einer Wohnung in einem Mehrfamilienhaus. Fünf Räume 39, 40, 41, 42, 43 der Wohnung sehen eine Mehrzahl von nicht einzeln dargestellten Klimamodulen 1, 30 vor, welche entsprechend der jeweiligen geometrischen Randbedingungen gestaltet und - wie vorstehend beschrieben - über geeignete Verbindungsleitungen miteinander verbunden sind. Die Klimamodule 1, 30 bilden zusammen mit den Verbindungsleitungen 32, 34 und den ihnen zugeordneten Abdeckungen 35, 38 für die Räume 39, 40, 41, 42, 43 individuell gestaltete Klimamodulreihungen 50. Der Anschluss der in den Räumen 39, 40, 41, 42, 43 vorgesehenen Klimamodulreihungen 50 erfolgt über einen Flur 44.

Zusätzlich ist ortsfern von der dargestellten Wohnung ein Klimaautomat (nicht dargestellt) vorgesehen, welcher zum Temperieren des in den Fluidleitungen 7, 8, 31, 33 geführten Fluids dient. Zwischen den Klimamodulreihungen 50 der Klimaanordnung und dem Klimaautomaten vorgesehene Zuleitungen 45 und Rückleitungen 46 werden über ein Treppenhaus 47 in den Flur 44 der Wohnung geführt und dort in die Räume 39, 40, 41, 42, 43 verteilt. Um eine individuelle Wartung der Wohnung unabhängig von den restlichen, nicht dargestellten Wohneinheiten des Mehrfamilienhauses zu ermöglichen, ist in dem Flur 37 im Bereich der Zuleitung 45 und der Rückleitung 46 ein Anschlussmodul 48 vorgesehen. Das Anschlussmodul 48 weist nicht dargestellte, der Zuleitung 45 beziehungsweise der Rückleitung 46 zugeordnete Mittel zum Absperren der Zuleitung 45 und der Rückleitung 46, Mittel zum Befüllen der Zuleitung 45 beziehungsweise der Rückleitung 46 mit dem Fluid beziehungsweise zum Entleeren der Zuleitung 45 und der Rückleitung 46, Mittel zum Entlüften der Zuleitung 45 beziehungsweise der Rückleitung 46 und/oder Mittel zum Erfassen einer mit dem Fluid in die Wohnung transportierten Wärmemenge beziehungsweise eines Volumenstroms des Fluids auf. Das Anschlussmodul 48 ist insofern als zentraler Anschlusspunkt für die Wohnung vorgesehen.

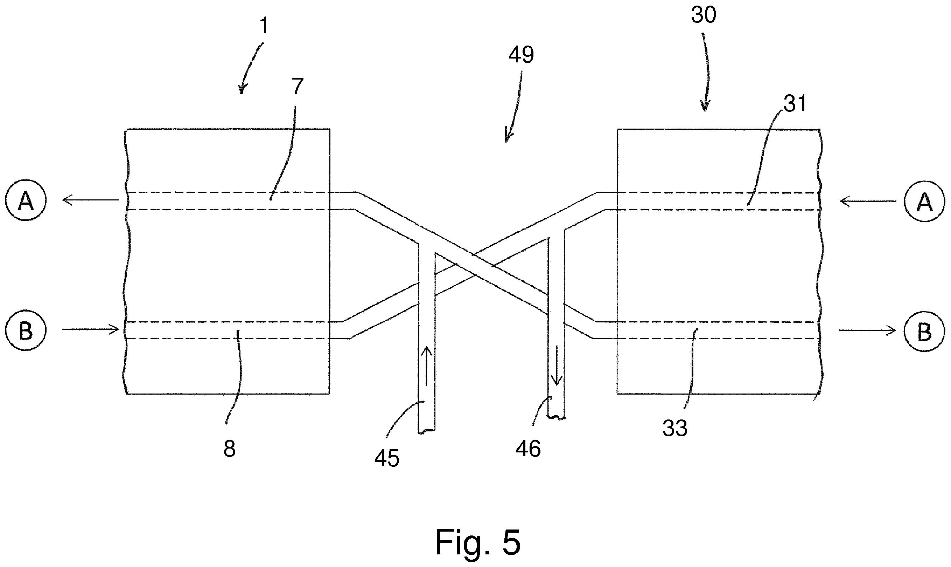

Jeweils sehen die in den Räumen 39, 40, 41, 42, 43 der Wohnung als Teil der Klimamodulreihung 50 vorgesehenen Klimamodule 1, 30 zwei Fluidleitungen 7, 8, 31, 33 vor. Um eine gleichmäßige Temperierung der Räume 39, 40, 41, 42, 43 zu erreichen, sind die Fluidleitungen 7, 8, 31, 33 über einen Beckerknoten 49 an die Zuleitung 45 und die Rückleitung 46 angeschlossen. Wie insbesondere in Fig. 5 dargestellt, ist die Zuleitung 44 hierzu mit der ersten Fluidleitung 7 des ersten Klimamoduls 1 und der vierten Fluidleitung 33 des zweiten Klimamoduls 30 verbunden. Die Rückleitung 46 wird gespeist durch die dem ersten Klimamodul 1 zugeordnete dritte Fluidleitung 8 und die dem zweiten Klimamodul 30 zugeordnete zweite Fluidleitung 31. Weiter sind die erste Fluidleitung 7 mit der dritten Fluidleitung 8 und die zweite Fluidleitung 31 mit der vierten Fluidleitung 33 verbunden. Es resultiert hierdurch ein in den Fluidleitungen 7, 31 einerseits und den Fluidleitungen 8, 33 andererseits gegenstromartig ausgebildeter Fluidumlauf. Für den Fall, dass der Raum mithilfe der Klimamodule 1, 30 erwärmt wird, gelangt über die Zuleitung 45 das Fluid mit einer hohen Temperatur sowohl in das erste Klimamodul 1 als auch in das zweite Klimamodul 30. Im Mittel ist die in den zwei Fluidleitungen 7, 8 des ersten Klimamoduls 1 herrschende Fluidtemperatur genauso hoch wie die Fluidtemperatur in den Fluidleitungen 31, 33 des zweiten Klimamoduls 30.

Nach einer alternativen, nicht dargestellten Ausführungsform der Erfindung kann in einem Klimamodul eine einzige Fluidleitung vorgesehen sein. Ebenso können mehr als zwei Fluidleitungen einem Klimamodul zugeordnet sein.

Optional kann zusätzlich zu der im Verbindungsbereich zwischen der Decke 2 und der Wand 3 geführten Deckenheizung eine Installation eines Heizstrangs vertikal erfolgen, beispielsweise im Bereich der Wand 3 und insbesondere im Bereich einer Raumecke. Der vertikale Heizungsstrang kann zusätzlich zur Deckenheizung vorgesehen werden, wenn beispielsweise große und insbesondere hohe Räume zu beheizen sind oder wenn aufgrund der Nutzung des Raums etwa als Büro eine ergänzende Heizfläche im Bereich der Wand energetische Vorteile bietet oder das Wohlbefinden der den Raum nutzenden Personen steigert. Der Aufbau der vertikalen Heizsegmente gleicht den dargestellten Klimamodulen 1 dahingehend, dass Fluidleitungen zum Erwärmen einer Klimaverteilplatte vorgesehen werden.

Gleiche Bauteile und Bauteilfunktionen sind durch gleiche Bezugszeichen gekennzeichnet.

## Patentansprüche

1. Klimaanordnung zum Beheizen und/oder Kühlen eines Raums umfassend ein erstes Klimamodul (1) und ein zweites Klimamodul (30)
- wobei das erste Klimamodul (1) und das zweite Klimamodul (30) langgestreckt ausgebildet sind,
- wobei das erste Klimamodul (1) und das zweite Klimamodul (30) in einem durch eine Wand (3) und eine Decke (2) gebildeten Verbindungsbereich des Raums (39, 40, 41, 42, 43) montierbar sind,
- wobei das erste Klimamodul (1) wenigstens eine erste von einem Fluid durchströmte Fluidleitung (7) vorsieht,
- wobei das zweite Klimamodul (30) wenigstens eine zweite von einem Fluid durchströmte Fluidleitung (31) vorsieht,
- wobei die erste Fluidleitung (7) sich in eine Längsrichtung des ersten Klimamoduls (1) erstreckt und wobei die zweite Fluidleitung (31) sich in eine Längsrichtung des zweiten Klimamoduls (30) erstreckt und
- wobei das erste Klimamodul (1) und das zweite Klimamodul (30) je eine mit der zugeordneten Fluidleitung (7, 8, 31, 33) thermisch gekoppelte Klimaverteilplatte (12, 36) aufweisen,
wobei das erste Klimamodul (1) und das zweite Klimamodul (30) zueinander beabstandet und/oder winkelversetzt vorgesehen sind, wobei zum Verbinden der in dem ersten Klimamodul (1) vorgesehenen ersten Fluidleitung (7) mit der in dem zweiten Klimamodul (30) vorgesehenen zweiten Fluidleitung (31) eine zwischen den Klimamodulen (1, 30) installierte Verbindungsleitung (32) vorgesehen ist und dass der Verbindungsleitung (32) eine Abdeckung (35, 38) zugeordnet ist, welche an eine an dem ersten Klimamodul (1) vorgesehenen ersten Klimaverteilplatte (12) und an eine an dem zweiten Klimamodul (30) vorgesehene zweite Klimaverteilplatte (36) anschließt, **dadurch gekennzeichnet, dass** in jedem Klimamodul (1, 30) wenigstens zwei Fluidleitungen (7, 8, 31, 33) zueinander beabstandet vorgesehen sind, wobei die wenigstens zwei Fluidleitungen (7, 8, 31, 33) in die Längsrichtung erstreckt und zueinander beabstandet in einem gemeinsamen luftgefüllten Installationsraum (6) vorgesehen sind, der von der Klimaverteilplatte (12, 36) begrenzt ist.

2. Klimaanordnung nach Anspruch 1, **dadurch gekennzeichnet, dass** die Verbindungsleitung (32) stoffschlüssig mit der ersten Fluidleitung (7) und mit der zweiten Fluidleitung (31) verbunden ist.

3. Klimaanordnung nach Anspruch 1 oder 2, **dadurch gekennzeichnet, dass** an dem ersten Klimamodul (1) und an dem zweiten Klimamodul (30) je mindestens ein Befestigungsmittel (18) vorgesehen ist, welches die in dem Installationsraum (6) vorgesehene Fluidleitung (7, 8) jedenfalls abschnittsweise umgreift und an einer der Fluidleitung (7, 8) zugewandten Innenseite (17) der Klimaverteilplatte (12) abschnittsweise flächig angelegt ist.

4. Klimaanordnung nach einem der Ansprüche 1 bis 3, **dadurch gekennzeichnet, dass** in dem luftgefüllten Installationsraum (6) wenigstens ein Haltemittel (21) für eine nicht fluidische Versorgungsleitung vorgesehen ist.

5. Klimaanordnung nach einem der Ansprüche 1 bis 4, **dadurch gekennzeichnet, dass** das Haltemittel (21) beabstandet zu der Klimaverteilplatte (12) und/oder den Fluidleitungen (7, 8) und/oder dem Befestigungselement/mittel (18) vorgesehen ist.

6. Klimaanordnung nach einem der Ansprüche 1 bis 5, **dadurch gekennzeichnet, dass** das Haltemittel (21) einen elastisch verformbaren Haltearm (22) vorsieht.

7. Klimaanordnung nach einem der Ansprüche 1 bis 6, **dadurch gekennzeichnet, dass** das Klimamodul (1, 30) eine der Decke (2) zugewandte, den Installationsraum (6) begrenzende Grundwandung (9) und eine der Wand (3) zugewandte, mit der Grundwandung (9) verbundene und den Installationsraum (6) begrenzende Rückwandung (11) aufweist und dass zum Positionieren des Klimamoduls (1, 30) in dem Verbindungbereich Beabstandungsmittel (24) zwischen der Grundwandung (9) und der Decke (2) einerseits und/oder zwischen der Wand (3) und der Rückwandung (11) des Klimamoduls (1, 30) andererseits vorgesehen sind.

8. Klimaanordnung nach einem der Ansprüche 1 bis 7, **dadurch gekennzeichnet, dass** ein Klimaautomat zum Temperieren eines durch die Fluidleitungen (7, 8, 31, 33) strömenden Fluids ortsfern von dem ersten Klimamodul (1) und dem zweiten Klimamodul (30) vorgesehen ist und dass zwischen dem Klimaautomaten und den Klimamodulen (1, 30) eine Zuleitung (45) zum Fördern des Fluids von dem Klimaautomaten zu den Klimamodulen (1, 30) und eine Rückleitung (46) zum Rückführen des Fluids zu dem Klimaautomaten vorgesehen sind.

9. Klimaanordnung nach einem der Ansprüche 1 bis 8, **dadurch gekennzeichnet, dass** zwischen dem Klimaautomaten und den Klimamodulen (1, 30) ein Anschlussmodul (48) vorgesehen ist, welches der zwischen dem Klimaautomaten und den Klimamodulen (1, 30) vorgesehenen Zuleitung (45) und/oder der zwischen dem Klimaautomaten und den Klimamodulen (1, 30) vorgesehenen Rückleitung (46) zugeordnet ist und welches
- Mittel zum Absperren der Zuleitung (45) und/oder der Rückleitung (46) und
- Mittel zum Befüllen der Zuleitung (45) und/oder der Rückleitung (46) mit dem Fluid und/oder zum Entleeren der Zuleitung (45) und/oder der Rückleitung (46) und
- Mittel zum Entlüften der Zuleitung (45) und/oder der Rückleitung (46) und
- Mittel zum Erfassen eines in der Zuleitung (45) und/oder der Rückleitung (46) geführten Volumenstroms des Fluids und/oder einer mit dem Fluid transportierten Wärmemenge aufweist.

10. Klimaanordnung nach einem der Ansprüche 1 bis 9, **dadurch gekennzeichnet, dass** in dem ersten Klimamodul (1) die erste Fluidleitung (7) und eine dritte (8) Fluidleitung vorgesehen sind und dass in dem zweiten Klimamodul (30) die zweite Fluidleitung (31) und eine vierte Fluidleitung (34) vorgesehen sind, dass die von dem Klimaautomaten zugeführte Zuleitung (45) mit der ersten Fluidleitung (7) und der vierten Fluidleitung (33) verbunden ist, dass die dem Klimaautomaten zugeführte Rückleitung (45) für das Fluid mit der zweiten Fluidleitung (8) und der dritten Fluidleitung (31) verbunden ist und dass weiterhin die erste Fluidleitung (7) mit der zweiten Fluidleitung (31) und die dritte Fluidleitung (8) mit der vierten Fluidleitung (33) verbunden sind.

11. Klimaanordnung nach einem der Ansprüche 1 bis 10, **dadurch gekennzeichnet, dass** eine Wandstärke der Verbindungsleitung (32, 34) geringer ist als eine Wandstärke der in den Klimamodulen (1, 30) vorgesehenen Fluidleitungen (7, 8, 31, 33) und/oder dass ein Außendurchmesser der Verbindungsleitung (32, 34) geringer ist als ein Innendurchmesser der in den Klimamodulen (1, 30) vorgesehenen Fluidleitungen (7, 8, 31, 33).

12. Installationsverfahren für eine Klimaanordnung nach einem der Ansprüche 1 bis 11, wobei eine einem ersten Klimamodul (1) zugeordnete erste Fluidleitung (7) über eine Verbindungsleitung (32) mit einer einem zweiten Klimamodul (30) zugeordneten zweiten Fluidleitung (31) verbunden wird, indem die Verbindungsleitung (32) stirnseitig in die erste Fluidleitung (7) und in die zweite Fluidleitung (31) eingesetzt wird und durch die Zuführung von elektrischer Energie erhitzt und stoffschlüssig mit der ersten Fluidleitung (7) und der zweiten Fluidleitung (31) verbunden wird.

13. Installationsverfahren für eine Klimaanordnung nach Anspruch 12, **dadurch gekennzeichnet, dass** zur Erwärmung der Verbindungsleitung (32, 34) eine elektrische Kontaktklemme mantelseitig an die Verbindungleitung (32, 34) angesetzt wird, dass dann die Verbindungsleitung (32, 34) durch das Zuführen von elektrischer Energie über die elektrische Kontaktklemme erwärmt wird und dass nach dem Herstellen einer stoffschlüssigen Verbindung zwischen den Fluidleitungen (7, 8, 31, 33) und der hierin eingesetzten Verbindungsleitung (32, 34) die elektrische Kontaktklemme entfernt wird.

14. Installationsverfahren für eine Klimaanordnung nach Anspruch 12 oder 13, **dadurch gekennzeichnet, dass** zur Festlegung des Klimamoduls (1, 30) in einem durch eine Wand (3) und eine Decke (2) definierten Verbindungsbereich zunächst eine der Decke (2) zugewandte Grundwandung (9) und/oder eine der Wand (3) zugewandte Rückwandung (11) an der Decke (2) und/oder Wand (3) festgelegt werden und dass dann eine Klimaverteilplatte (12, 36), an welcher die Fluidleitungen (7, 8, 31, 33) gehalten sind, an der Grundwandung (9) und/oder der Rückwandung (11) festgelegt wird.

## Claims

1. Air-conditioning assembly for heating and/or cooling a room, comprising a first air-conditioning module (1) and a second air-conditioning module (30),
- the first air-conditioning module (1) and the second air-conditioning module (30) being formed elongate,
- the first air-conditioning module (1) and the second air-conditioning module (30) being mountable in a connecting region, formed by a wall (3) and a ceiling (2), of the space (39, 40, 41, 42, 43),
- the first air-conditioning module (1) providing at least one first fluid line (7) flowed through by a fluid,
- the second air-conditioning module (30) providing at least one second fluid line (31) flowed through by a fluid,
- the first fluid line (7) extending in a longitudinal direction of the first air-conditioning module (1) and a second fluid line (31) extending in a longitudinal direction of the second air-conditioning module (30), and
- the first air-conditioning module (1) and the second air-conditioning module (30) each having an air-conditioning distributor plate (12, 36) which is thermally coupled to the associated fluid line (7, 8, 31, 33),
the first air-conditioning module (1) and the second air-conditioning module (30) being provided spaced apart and/or angularly offset from one another, a connecting line (32) installed between the air-conditioning modules (1, 30) being provided for connecting the first fluid line (7) provided in the first air-conditioning module (1) to the second fluid line (31) provided in the second air-conditioning module (30), and a covering (35, 38), which joins onto a first air-conditioning distributor plate (12) provided on the first air-conditioning module (1) and onto a second air-conditioning distribution plate (36) provided on the second air-conditioning module (30), being assigned to the connecting line (32), **characterised in that** at least two fluid lines (7, 8, 31, 33) are provided spaced apart from one another in each air-conditioning module (1, 30), the at least two fluid lines (7, 8, 31, 33) extending in the longitudinal direction and being provided spaced apart from one another in a shared air-filled installation space (6) which is delimited by the air-conditioning distributor plate (12, 36).

2. Air-conditioning assembly according to claim 1, **characterised in that** the connecting line (32) is connected to the first fluid line (7) and to the second fluid line (31) by material bonding.

3. Air-conditioning assembly according to either claim 1 or claim 2, **characterised in that** at least one fastening means (18) is provided on each of the first air-conditioning module (1) and the second air-conditioning module (30), and engages at least in portions around the fluid line (7, 8) provided in the installation space (6) and is laid flat in portions on an inner face (17), facing the fluid line (7, 8), of the air-conditioning plate (12).

4. Air-conditioning assembly according to any of claims 1 to 3, **characterised in that** at least one holding means (21) for a non-fluid supply line is provided in the air-filled installation space (6).

5. Air-conditioning assembly according to any of claims 1 to 4, **characterised in that** the holding means (21) is provided spaced apart from the air-conditioning distributor plate (12) and/or the fluid lines (7, 8) and/or the fastening element/means (18).

6. Air-conditioning assembly according to any of claims 1 to 5, **characterised in that** the holding means (21) provides a resiliently deformable holding arm (22).

7. Air-conditioning assembly according to any of claims 1 to 6, **characterised in that** the air-conditioning module (1, 30) has a base wall (9), which faces the ceiling (2) and delimits the installation space (6), and a rear wall (11), which faces the wall (3), is connected to the base wall (9) and delimits the installation space (6), and **in that**, for positioning the air-conditioning module (10, 30) in the connecting region, spacing means (24) are provided between the base wall (9) and the ceiling (2) on the one hand and/or between the wall (3) and the rear wall (11) of the air-conditioning module (1, 30) on the other hand.

8. Air-conditioning assembly according to any of claims 1 to 7, **characterised in that** an air-conditioning system for temperature-controlling a fluid flowing through the fluid lines (7, 8, 31, 33) is provided remote from the first air-conditioning module (1) and the second air-conditioning module (30), and **in that** a supply line (45) for conveying the fluid from the air-conditioning system to the air-conditioning modules (1, 30) and a return line (46) for returning the fluid to the air-conditioning systems are provided between the air-conditioning systems and the air-conditioning modules (1, 30).

9. Air-conditioning assembly according to any of claims 1 to 8, **characterised in that** a joining module (48) is provided between the air-conditioning system and the air-conditioning modules (1, 30), is assigned to the supply line (45) provided between the air-conditioning system and the air-conditioning modules (1, 30) and/or to the return line (46) provided between the air-conditioning system and the air-conditioning modules (1, 30), and has
- means for blocking the supply line (45) and/or the return line (46),
- means for filling the supply line (45) and/or the return line (46) with the fluid and/or for evacuating the supply line (45) and/or the return line (46),
- means for bleeding air from the supply line (45) and/or the return line (46), and
- means for detecting volume flow of the fluid guided in the supply line (45) and/or return line (46) and/or an amount of heat transported along with the fluid.

10. Air-conditioning assembly according to any of claims 1 to 9, **characterised in that** the first fluid line (7) and a third fluid line (8) are provided in the first air-conditioning module (1) and **in that** the second fluid line (31) and a fourth fluid line (34) are provided in the second air-conditioning module (30), **in that** the supply line (45), supplied from the air-conditioning systems, is connected to the first fluid line (7) and the fourth fluid line (33), **in that** the return line (45) for the fluid, supplied to the air-conditioning systems, is connected to the second fluid line (8) and the third fluid line (31), and **in that** furthermore the first fluid line (7) is connected to the second fluid line (31) and the third fluid line (8) is connected to the fourth fluid line (33).

11. Air-conditioning assembly according to any of claims 1 to 10, **characterised in that** a wall thickness of the connecting line (32, 34) is less than a wall thickness of the fluid lines (7, 8, 31, 33) provided in the air-conditioning modules (1, 30) and/or **in that** an external diameter of the connecting line (32, 34) is less than an internal diameter of the fluid lines (7, 8, 31, 33) provided in the air-conditioning modules (1, 30).

12. Installation method for an air-conditioning assembly according to any of claims 1 to 11, a first fluid line (7) assigned to a first air-conditioning module (1) being connected via a connecting line (32) to a second fluid line (31) assigned to a second air-conditioning module (30) in that the connecting line (32) is inserted at the end face into the first fluid line (7) and into the second fluid line (31) and heated by supplying electrical energy and connected to the first fluid line (7) and the second fluid line (31) by material bonding.

13. Installation method for an air-conditioning assembly according to claim 12, **characterised in that** for heating the connecting line (32, 34) an electrical contact terminal is placed on the connecting line (32, 34) on the outer side, **in that** the connecting line (32, 34) is subsequently heated by supplying electrical energy via the electrical contact terminal, and **in that**, after a connection by material bonding is established between the fluid lines (7, 8, 31, 33) and the connecting line (32, 34) inserted into them, the electrical contact terminal is removed.

14. Installation method for an air-conditioning assembly according to either claim 12 or claim 13, **characterised in that**, for fixing the air-conditioning module (1, 30) in a connecting region defined by a wall (3) and a ceiling (2), initially a base wall (9) facing the ceiling (2) and/or a rear wall (11) facing the wall (3) are fixed to the ceiling (2) and/or wall (3), and **in that** subsequently an air-conditioning distributor plate (12, 36), on which the fluid lines (7, 8, 31, 33) are held, is fixed to the base wall (9) and/or the rear wall (11).

## Revendications

1. Système de climatisation pour le chauffage et/ou le refroidissement d'une pièce, comprenant un premier module de climatisation (1) et un deuxième module de climatisation (30),
- dans lequel le premier module de climatisation (1) et le deuxième module de climatisation (30) sont conçus allongés,
- dans lequel le premier module de climatisation (1) et le deuxième module de climatisation (30) peuvent être montés dans une zone de liaison de la pièce (39, 40, 41, 42, 43) formée par un mur (3) et un plafond (2),
- dans lequel le premier module de climatisation (1) prévoit au moins une première conduite de fluide (7) traversée par un fluide,
- dans lequel le deuxième module de climatisation (30) prévoit au moins une deuxième conduite de fluide (31) traversée par un fluide,
- dans lequel la première conduite de fluide (7) s'étend dans une direction longitudinale du premier module de climatisation (1) et dans lequel la deuxième conduite de fluide (31) s'étend dans une direction longitudinale du deuxième module de climatisation (30), et
- dans lequel le premier module de climatisation (1) et le deuxième module de climatisation (30) présentent chacun une plaque de répartition de climatisation (12, 36) couplée thermiquement à la conduite de fluide associée (7, 8, 31, 33),
dans lequel le premier module de climatisation (1) et le deuxième module de climatisation (30) sont prévus à distance l'un de l'autre et/ou décalés angulairement, dans lequel une conduite de liaison (32) installée entre les modules de climatisation (1, 30) est prévue pour relier la première conduite de fluide (7) prévue dans le premier module de climatisation (1) à la deuxième conduite de fluide (31) prévue dans le deuxième module de climatisation (30), et
dans lequel un couvercle (35, 38) est associé à la ligne de liaison (32), lequel se raccorde à une première plaque de répartition de climatisation (12) prévue sur le premier module de climatisation (1) et à une deuxième plaque de répartition de climatisation (36) prévue sur le deuxième module de climatisation (30),
**caractérisé en ce que**, dans chaque module de climatisation (1, 30), au moins deux conduites de fluide (7, 8, 31, 33) sont prévues à distance l'une de l'autre, lesdites au moins deux conduites de fluide (7, 8, 31, 33) s'étendant dans la direction longitudinale et étant prévues à distance l'une de l'autre dans un espace d'installation commun rempli d'air (6) qui est délimité par la plaque de répartition de climatisation (12, 36).

2. Système de climatisation selon la revendication 1, **caractérisé en ce que** la conduite de liaison (32) est reliée par coopération de matières à la première conduite de fluide (7) et à la deuxième conduite de fluide (31).

3. Système de climatisation selon la revendication 1 ou 2, **caractérisé en ce que** sur le premier module de climatisation (1) et sur le deuxième module de climatisation (30), il est prévu au moins un moyen de fixation (18) qui entoure au moins par endroits la conduite de fluide (7, 8) prévue dans l'espace d'installation (6) et qui est appliqué à plat par endroits sur un côté intérieur (17) de la plaque de répartition de climatisation (12) tourné vers la conduite de fluide (7, 8).

4. Système de climatisation selon l'une des revendications 1 à 3, **caractérisé en ce qu'**au moins un moyen de maintien (21) pour une conduite d'amenée non fluidique est prévu dans l'espace d'installation rempli d'air (6).

5. Système de climatisation selon l'une des revendications 1 à 4, **caractérisé en ce que** le moyen de maintien (21) est prévu à distance de la plaque de répartition de climatisation (12) et/ou des conduites de fluide (7, 8) et/ou de l'élément/du moyen de fixation (18).

6. Système de climatisation selon l'une des revendications 1 à 5, **caractérisé en ce que** le moyen de maintien (21) prévoit un bras de maintien (22) élastiquement déformable.

7. Système de climatisation selon l'une des revendications 1 à 6, **caractérisé en ce que** le module de climatisation (1, 30) présente une paroi de base (9) tournée vers le plafond (2) et délimitant l'espace d'installation (6) et une paroi arrière (11) tournée vers le mur (3), reliée à la paroi de base (9) et délimitant l'espace d'installation (6), et que, pour le positionnement du module de climatisation (1, 30), des moyens d'écartement (24) sont prévus dans la zone de liaison entre la paroi de base (9) et le plafond (2) d'une part et/ou entre le mur (3) et la paroi arrière (11) du module de climatisation (1, 30) d'autre part.

8. Système de climatisation selon l'une des revendications 1 à 7, **caractérisé en ce qu'**il est prévu, à distance du premier module de climatisation (1) et du deuxième module de climatisation (30), un automate de climatisation pour réguler la température d'un fluide circulant dans les conduites de fluide (7, 8, 31, 33), et qu'il est prévu, entre l'automate de climatisation et les modules de climatisation (1, 30), une conduite d'amenée (45) pour amener le fluide de l'automate de climatisation aux modules de climatisation (1, 30) et une conduite de retour (46) pour ramener le fluide à l'automate de climatisation.

9. Système de climatisation selon l'une des revendications 1 à 8, **caractérisé en ce qu'**il est prévu un module de raccordement (48) entre l'automate de climatisation et les modules de climatisation (1, 30), lequel est associé à la conduite d'amenée (45) prévue entre l'automate de climatisation et les modules de climatisation (1, 30) et/ou à la conduite de retour (46) prévue entre l'automate de climatisation et les modules de climatisation (1, 30) et lequel présente
- des moyens pour couper la ligne d'amenée (45) et/ou la ligne de retour (46) et
- des moyens pour remplir la conduite d'amenée (45) et/ou la conduite de retour (46) avec le fluide et/ou pour vider la conduite d'amenée (45) et/ou la conduite de retour (46) et
- des moyens pour purger la conduite d'amenée (45) et/ou la conduite de retour (46) et
- des moyens pour détecter un débit volumique du fluide passant dans la conduite d'amenée (45) et/ou la conduite de retour (46) et/ou une quantité de chaleur transportée avec le fluide.

10. Système de climatisation selon l'une des revendications 1 à 9, **caractérisé en ce que** la première conduite de fluide (7) et une troisième conduite de fluide (8) sont prévues dans le premier module de climatisation (1), et que la deuxième conduite de fluide (31) et une quatrième conduite de fluide (34) sont prévues dans le deuxième module de climatisation (30), que la conduite d'amenée (45) venant de l'automate de climatisation est reliée à la première conduite de fluide (7) et à la quatrième conduite de fluide (33), que la conduite de retour (45) du fluide ramenant à l'automate de climatisation est reliée à la deuxième conduite de fluide (8) et à la troisième conduite de fluide (31), et que, en outre, la première conduite de fluide (7) est reliée à la deuxième conduite de fluide (31) et la troisième conduite de fluide (8) à la quatrième conduite de fluide (33).

11. Système de climatisation selon l'une des revendications 1 à 10, **caractérisé en ce qu'**une épaisseur de paroi de la conduite de liaison (32, 34) est inférieure à une épaisseur de paroi des conduites de fluide (7, 8, 31, 33) prévues dans les modules de climatisation (1, 30) et/ou qu'un diamètre extérieur de la conduite de liaison (32, 34) est inférieur à un diamètre intérieur des conduites de fluide (7, 8, 31, 33) prévues dans les modules de climatisation (1, 30).

12. Procédé d'installation d'un système de climatisation selon l'une des revendications 1 à 11, dans lequel une première conduite de fluide (7) associée à un premier module de climatisation (1) est reliée par une conduite de liaison (32) à une deuxième conduite de fluide (31) associée à un deuxième module de climatisation (30), la conduite de liaison (32) étant insérée frontalement dans la première conduite de fluide (7) et dans la deuxième conduite de fluide (31) et, par l'apport d'énergie électrique, chauffée et reliée par coopération de matières à la première conduite de fluide (7) et à la deuxième conduite de fluide (31).

13. Procédé d'installation d'un système de climatisation selon la revendication 12, **caractérisé en ce que**, pour chauffer la conduite de liaison (32, 34), une borne de contact électrique est fixée côté gaine sur la conduite de liaison (32, 34), que la conduite de liaison (32, 34) est ensuite chauffée par l'apport d'énergie électrique par l'intermédiaire de la borne de contact électrique, et que, après la réalisation d'une liaison par coopération de matières entre les conduites de fluide (7, 8, 31, 33) et la conduite de liaison (32, 34) qui y est insérée, la borne de contact électrique est retirée.

14. Procédé d'installation d'un système de climatisation selon la revendication 12 ou 13, **caractérisé en ce que**, pour fixer le module de climatisation (1, 30) dans une zone de liaison définie par un mur (3) et un plafond (2), on fixe d'abord une paroi de base (9) tournée vers le plafond (2) et/ou une paroi arrière (11) tournée vers le mur (3) au plafond (2) et/ou au mur (3), et on fixe ensuite sur la paroi de base (9) et/ou la paroi arrière (11) une plaque de répartition de climatisation (12, 36) sur laquelle les conduites de fluide (7, 8, 31, 33) sont maintenues.
